# EUROPÄISCHE PATENTSCHRIFT

(11) **EP 0 835 411 B1**
(45) Veröffentlichungstag und Bekanntmachung des Hinweises auf die Patenterteilung: **29.09.1999**
(21) Anmeldenummer: 96918571.9
(22) Anmeldetag: 28.06.1996
(51) Int. Cl.: F24D 11/00, H02P 9/42

(54) **VERFAHREN ZUR DOSIERUNG DER WÄRMELEISTUNG IN WÄRME-KRAFT-KOPPELUNGSVORRICHTUNGEN UND VORRICHTUNG DAZU**
PROCESS AND DEVICE FOR ADJUSTING THE THERMAL OUTPUT OF COMBINED HEAT AND POWER GENERATION SYSTEMS
PROCEDE ET DISPOSITIF DE REGLAGE DE LA PUISSANCE CALORIFIQUE DANS DES INSTALLATIONS DE PRODUCTION COMBINEE DE CHALEUR ET D'ELECTRICITE

(30) Priorität: 30.06.1995 CH 192795
(43) Veröffentlichungstag der Anmeldung: 15.04.1998
(73) Patentinhaber: Ecopower Energy Solutions AG, 2500 Biel (CH)
(72) Erfinder: Ryhiner, Daniel G., 2502 Biel (CH)
(74) Vertreter: Braun, André
(86) Internationale Anmeldenummer: CH9600240
(87) Internationale Veröffentlichungsnummer: WO9702454

(56) Entgegenhaltungen:
- EP-A- 0 127 742
- EP-A- 0 579 258
- DE-A- 3 642 650
- DE-A- 4 232 356

## Beschreibung

Das Verfahren betrifft die drehzahlmässig gesteuerte Dosierung der Wärmeleistung einer Wärme-Kraft-Koppelungsvorrichtung, insbesondere eines Blockheizkraftwerks.

Blockheizkraftwerke (=BHKW) sind relativ kleine Energieanlagen zur Erzeugung von elektrischem Strom und Wärme, wobei zur Erzeugung des elektrischen Strom Generatoren dienen, die von Wärmekraftmaschinen (z.B. Hubkolben-, Wankel-, Stirlingmotoren oder Gasturbinen) angetrieben werden. Die Erzeugung von Wärme erfolgt aus der Nutzung der Abwärme aus Kühlwasser und Abgas. Diese Art der Energieerzeugung wird auch als Wärme-Kraft-Kopplung (WKK) bezeichnet.

Einerseits werden bisherige BHKW mit konstanter Drehzahl betrieben (z.B. 1500 U/min), um via Generator die geforderte Netzfrequenz (z.B. 50 Hz) zu erzeugen und aufrecht zu erhalten. Andererseits werden heutige BHKWs in der Regel mit Vollast, d.h. mit vollständig geöffneter Drosselklappe, betrieben, weil bei gegebener Drehzahl der Wirkungsgrad so am grössten ist.

Diese beiden Forderungen nach konstanter Drehzahl und möglichst hoher Last verhindern bei den heutigen Anlagen, dass diese an eine Veränderung des Wärmebedarfs, z.B. einer angeschlossenen Hausheizung, angepasst werden können. Die Leistung von Wärmekraftmaschinen kann bekanntlich nur entweder durch Veränderung der Drehzahl oder aber der Last variiert werden. Würde man z.B. versuchen, unter Aufrechterhaltung einer konstanten Drehzahl die Abwärmeleistung durch Schliessen der Drosselklappe um einen bestimmten Betrag zu reduzieren, so wäre diese Massnahme nur bedingt erfolgreich. Zwar würde durch die Abnahme des Drehmoments an der Welle die Generatorleistung in Funktion der Drosselklappenstellung sinken, die Wärmeabgabe aber würde nur ungenügend reduziert werden, weil sich bei gedrosselter Wärmekraftmaschine als Folge der Drosselverluste und des sinkenden Wärmekraftmaschinenmitteldrucks eine Wirkungsgradverschlechterung ergibt.

Deshalb bestehen BHKW nicht selten aus mehreren Wärmekraftmaschinen-Generator Einheiten und einem Heizkessel für Spitzenleistungen, so dass die Energieabgabe der BHKW durch Zu- resp. Ausschalten einzelner Einheiten möglichst nahe an der Jahresdauerlinie (d.h. die für die Periode eines Jahres geltende Summenhäufigkeitsverteilung des Wärmeleistungsbedarfs eines Versorgungsobjekts) zu liegen kommt.

Aus einer solchen Jahresdauerlinie, wie sie z.B. für ein bestimmtes Wohnobjekt in Fig.4 gezeigt wird, ist unschwer ablesbar, dass der Bedarf an Wärmeleistung über das Jahr gerechnet sehr unterschiedlich sein kann. Anhand der Jahresdauerlinie lässt sich bei der Planung eines BHKW die zu installierende Leistung in Wärmekraftmaschinen-Generator Einheiten und Spitzenkessel aufteilen. In Fig.4 sind z.B. 5 Wärmekraftmaschinen-Generator Einheiten (M1-M5) für insgesamt 50% der maximalen Leistung und ein üblicher Heizkessel (schraffierte Fläche) für die restlichen 50% zur Deckung von Leistungsspitzen vorgesehen, um die über das Jahr benötigte Wärmeleistung (Q) von 100% erbringen zu können. Die für die Teilleistungen eingezeichneten Rechtecke geben die Jahresarbeiten resp. Vollaststunden (0-8760 h/a =Jahresheizstunden) an. Erkennbar ist, dass der einzelne Motor in Fig.4 nur ca. 10% der Gesamtleistung abdecken kann. Bei günstigen Jahresdauerlinien kann dieser Prozentsatz nach dem Stand der Technik bis auf 15% erhöht werden.

In Fig.5 wird eine weitere Jahresdauerlinie für ein konventionelles BHKW mit einer Wärmekraftmaschinen-Generator Einheit gezeigt, die 30% der Wärmeleistung (Q) erbringen kann (schraffierte Fläche). Für die beiden nicht schraffierten Flächen muss zusätzlich ein konventionelles Heizsystem bereitstehen, um bei einem Wärmebedarf von >30% das BHKW zu ergänzen und bei einem Wärmebedarf von <30% bei ausgeschaltetem BHKW die Wärmeerzeugung alleine zu übernehmen.

Überraschenderweise wurde nun gefunden, dass die Dosierung der Wärmeleistung unter Beibehaltung der Stellung der Last-Steuerungsorgane (z.B. Drosselklappe) im Bereich des Wirkungsgradmaximums der Wärmekraftmaschine über die Veränderung der Drehzahl der Wärmekraftmaschine resp. des Generators mittels vermehrter oder verringerter Abgabe von elektrischer Energie vorzugsweise ins öffentliche Netz erfolgen kann.

Eine mittels des erfindungsgemässen Verfahrens betriebene Wärme-Kraft-Koppelungsvorrichtung, insbesondere ein BHKW, weist demgemäss die oben erwähnten Probleme nicht mehr auf, weil die Leistungsabgabe einer solchen Vorrichtung auch mit nur einer einzigen Wärmekraftmaschine-Generator Einheit durch Steuerung der Wärmeabgabe jeweils der Jahresdauerlinie angepasst werden kann.

Erreicht wird dies dadurch, dass die Wärmekraftmaschine in Vollastposition (offene Drosselklappe) resp. im Wirkungsgradoptimum allein durch Verringern resp. Erhöhen der Drehzahl mit Hilfe der Änderung der Stromabgabe z.B. an das öffentliche Netz auf ein niedrigeres resp. höheres Drehzahlniveau gebracht wird.

Wird der Generator über einen Stromregler zu einer erhöhten Stromabgabe an das öffentliche Netz gezwungen, so wird er dadurch mehr belastet und bremst so die Wärmekraftmaschine-Generatoreinheit auf eine niedrigere Drehzahl ab. So kann die Leistung unter Beibehaltung einer stets offenen Drosselklappe auf ein beliebiges Niveau eingestellt werden. Die Stromregelung entspricht dabei der üblichen Methode, wonach eine Spannungserhöhung über das Niveau der Netzspannung auch zu einem erhöhten Stromfluss führt.

Die Dosierung der Wärmeabgabe eines BHKW's unter Vollast kann somit durch Belastung des Generators mit dem Stromnetz und daraus folgender Regelung der Drehzahl erfolgen.

Da sich bei Drehzahländerungen des Motors auch die Frequenz des dabei erzeugten elektrischen Stroms ändert, und dies bei einer für den Verbraucher gleichförmig benötigten Frequenz des Wechselstroms von 50 Hz unerwünscht ist, kann der elektrische Strom z.B. durch eine übliche AC/DC/AC-Wandlung mittels Frequenzwandler auf dem Netzfrequenzniveau gehalten werden.

Im folgenden wird das erfindungsgemässe Verfahren und eine Vorrichtung dazu näher erläutert.

In Fig.1 wird das Prinzipschema eines BHKW für z.B. ein Einfamilienhaus gezeigt.

In Fig.2a wird die Generatorleistung und Wärmeproduktion mit der erfindungsgemässen Regelung der Wärme und in Fig.2b mit der konventionelle Regelung mit konstanter Generatordrehzahl dargestellt.

In Fig.3 wird die Abdeckung des Wärmebedarfs z.B. eines Einfamilienhauses mit einem erfindungsgemäss geregelten BHKW gezeigt.

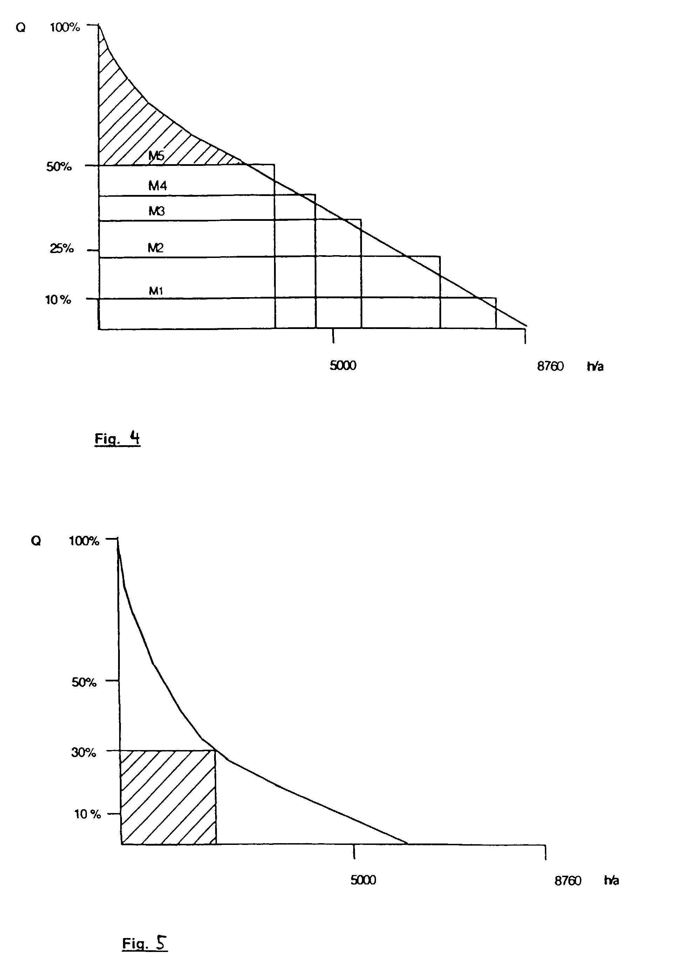

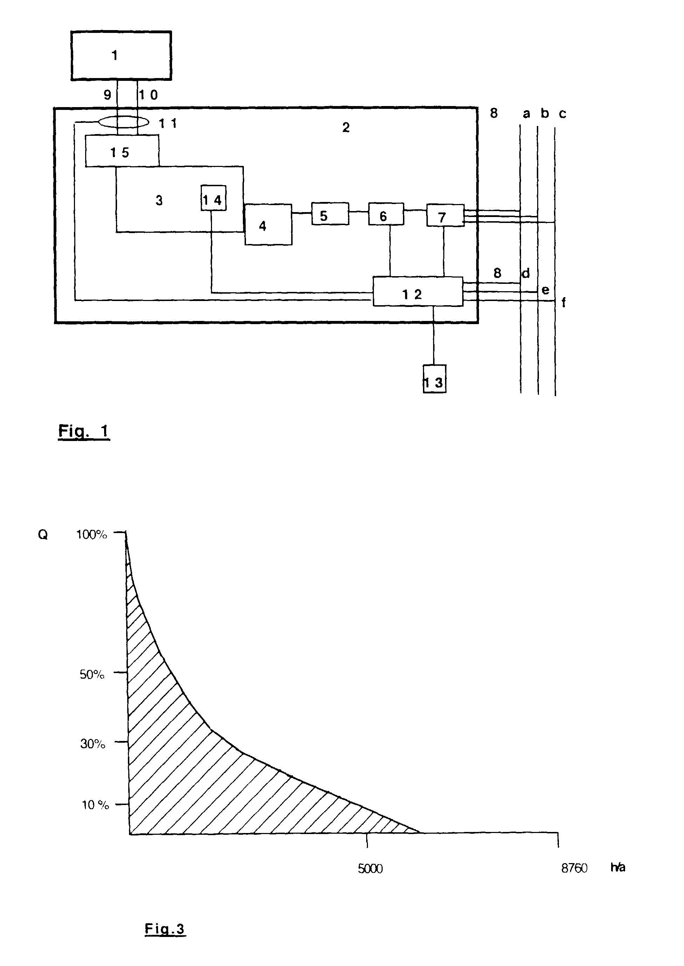

In Fig.1 wird mit (1) die Zentralheitzung und mit (2) das BHKW bezeichnet. Das BHKW (2) enthält einen Verbrennungsmotor (3) und einen Generator 0-370 V / 0-1 500 Hz (4). Um elektrische Energie gleichbleibender Frequenz an den Hausanschluss resp. ans öffentliche Netz (50 Hz) liefern zu können, wird ein Gleichrichter (5), ein Aufwärtswandler +/- 370 V DC (6) und ein Wechselrichter 3x400 V AC 50 Hz mit kombiniertem Stromregler (7) ins BHKW integriert. Die elektrische Energie wird dann mit 3x400 V AC ins öffentliche Netz abgegeben (8 a-c). In der Vor- (9) und Rücklaufleitung (10) der Zentralheizung (1) wird z.B. ein Temperaturdifferenzenfühler (11) angebracht, der den Wärmebedarf der Heizung an das Steuerorgan (12) meldet. Die Anpassung der Wärmeleistung erfolgt z.B. durch Aufrechterhaltung einer vorgegebenen Temperaturdifferenz. Alternativ kann die Vorgabe der benötigten Wärmeleistung auch durch einen Aussentemperaturfühler (13) erfolgen. Das Steuerorgan (12) bestimmt die vom BHKW abzugebende Motorleistung und regelt den Stromfluss über den Wechselrichter (7) ins Netz (8a-c), um dadurch den Generator (4) mehr oder minder zu belasten (=abzubremsen) und damit die Drehzahl und somit auch die Motorleistung auf den von der Heizung vorgegebenen Wert einzupendeln. Die Drosselklappe (14) wird bei diesem Vorgang vom Steuergerät stets offen gehalten. Mit 8d-f wird der Abgriff für die Netzüberwachung und Synchronisation bezeichnet. Das abgekühlte Wasser der Zentralheizung (1) wird durch den Rücklauf (10) in den Wärmetauscher (15) eingeleitet, nimmt dort wieder Wärme auf und gelangt via Heizungsvorlauf (9) wieder in die Zentralheizung (1).

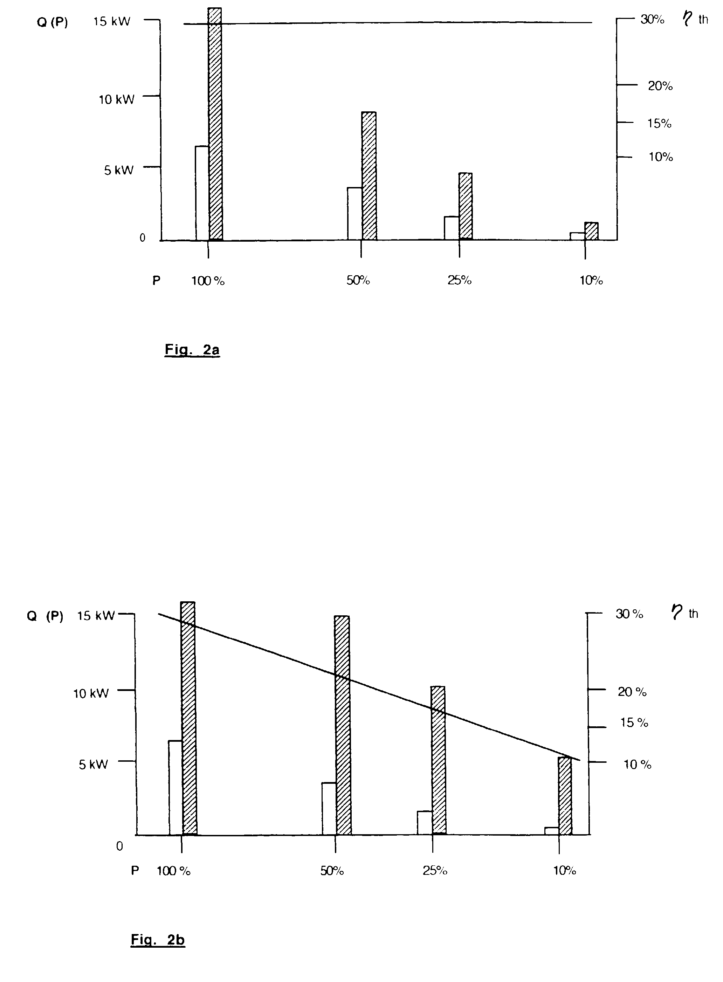

Mittels des erfindungsgemässen Verfahrens und der dazu benötigten Vorrichtung erhält man das in Fig. 2a gezeigte Verhältnis von Generatorleistung und Wärmeproduktion (0-15 kW). Dabei wird das BHKW mit variabler Drehzahl unter Vollast betrieben, wobei die Motorleistung (P) auf 100%, 50%, 25% und 10% eingestellt wird. Die mit schraffiertem Balken angegebene Wärmeleistung (Q) in kW nimmt proportional zur mit unschraffiertem Balken angegebenen Generatorleistung (P) in kW ab. Die Wärmeleistung lässt sich in weitem Umfang variieren, obwohl der Wirkungsgrad η des Motors bei ca. 30% verbleibt (waagrechte Linie).

In Fig.2b wird vergleichshalber eine konventionelle Regelung mit konstanter Generatordrehzahl analog gezeigt. Die Leistungsanpassung erfolgt dabei über die Drosselung des Motors bei konstanter Drehzahl. Auch hier nimmt die mit unschraffiertem Balken angegebene Generatorleistung (P) in kW ab, doch der Motorwirkungsgrad η sinkt dabei (geneigte Linie). Deshalb nimmt die mit schraffiertem Balken angegebene Wärmeleistung (Q) in kW nur geringfügig ab. Die Wärmeleistung lässt sich nur in geringem Umfang variieren.

In Fig.3 wird gezeigt, dass durch die leicht und in grossem Umfang variierbare Wärmeleistung (0-100%) (Q) eines nach dem erfindungsgemässen Verfahren betriebenen BHKW's der gesamte Wärmebedarf eines Hauses entlang der Jahresdauerlinie (0-8760 h/a) mittels einer einzigen Motor-Generator Einheit (schraffierte Fläche) abgedeckt werden kann.

## Patentansprüche

1. Verfahren zur Dosierung der Wärmeleistung einer Wärme-Kraft-Koppelungsvorrichtung, wobei unter Beibehaltung der Stellung der Last-Steuerungsorgane im Bereich des Wirkungsgradmaximums der Wärmekraftmaschine die Drehzahl der Wärmekraftmaschine resp. des Generators mittels vermehrter oder verringerter Abgabe von elektrischer Energie, vorzugsweise ins öffentliche Netz via Generator, verändert wird.

2. Verfahren nach Patentanspruch 1, dadurch gekennzeichnet, dass die elektrische Energie durch eine AC/ DC/AC-Wandlung mittels Frequenzumrichter auf konstantem Frequenzniveau gehalten wird.

3. Verfahren nach einem der Patentansprüche 1 oder 2, dadurch gekennzeichnet, dass die Steuerung der Wärmeleistung mit einer einzigen Wärmekraftmachine-Generator Einheit annähernd entlang der Jahresdauerlinie des betreffenden Objekts erfolgt.

4. Anwendung des Verfahrens nach einem der Patentansprüche 1-3 auf Blockheizkraftwerke (=BHKW).

5. Blockheizkraftwerk zur Durchführung des Verfahrens nach einem der Patentansprüche 1-3, dadurch gekennzeichnet, dass es eine Wärmekraftmaschine (3), einen Generator (4), einen Gleichrichter (5), einen Aufwärtswandler (6), einen Wechselrichter mit kombiniertem Stromregler (7) und Steuerungsorgane (12) enthält.

## Claims

1. A process for dosing the heating performance of a combined heat and power generation apparatus, wherein the speed of the thermal engine, or the generator, is altered by means of an increased or reduced output of electrical energy, preferably into the public mains system via the generator, whilst maintaining the setting of the load-control parts in the region of maximum efficiency of the thermal engine.

2. A process according to claim 1, characterised in that the electrical energy is kept at a constant frequency level by means of AC/DC/AC transformation via a frequency inverter.

3. A process according to one of claims 1 or 2, characterised in that control of the heating performance takes place via a single thermal engine generator unit approximately along the line of annual duration of the object in question.

4. Use of the process according to one of claims 1 to 3 in block-type thermal power stations (= BHKW).

5. A block-type thermal power station for implementation of the process according to one of claims 1 to 3, characterised in that it contains a thermal engine (3), a generator (4), a rectifier (5), an up converter (6), a DC / AC converter with combined current regulator (7) and control parts (12).

## Revendications

1. Procédé de dosage de la puissance calorifique d'un dispositif de production combinée de chaleur et d'électricité, dans lequel, en maintenant la position des éléments de commande de charge dans le domaine du rendement maximal du moteur thermique, la vitesse de rotation du moteur thermique ou du générateur est modifiée en délivrant plus ou moins d'énergie électrique, de préférence dans le réseau public par l'intermédiaire d'un générateur.

2. Procédé selon la revendication 1, caractérisé en ce que l'énergie électrique est maintenue à un niveau de fréquence constant par une conversion CA/CC/CA.

3. Procédé selon l'une quelconque des revendications 1 ou 2, caractérisé en ce que la commande de la puissance calorifique est effectuée avec une seule unité de moteur thermique/ générateur, approximativement suivant la ligne continue annuelle de l'objet en question.

4. Application du procédé selon l'une quelconque des revendications 1 à 3 à des centrales thermiques en montage bloc (BHKW).

5. Centrale thermique en montage bloc pour la réalisation du procédé selon l'une quelconque des revendications 1 à 3, caractérisé en ce qu'elle contient un moteur thermique (3), un générateur (4), un redresseur (5), un convertisseur élévateur (6), un onduleur avec un rhéostat-régulateur d'intensité combiné (7) et des éléments de commande (12).
